# EUROPEAN PATENT APPLICATION

(11) **EP 4 310 948 A1**
(43) Date of publication of application: **24.01.2024**
(21) Application number: 23186905.8
(22) Date of filing: 21.07.2023
(51) Int. Cl.: H01M 4/36, H01M 4/48, H01M 4/505, H01M 4/525, H01M 4/58, H01M 4/62, H01M 10/0525, H01M 50/449

(54) **POSITIVE ELECTRODE AND BATTERY EMPLOYING THE SAME**

(30) Priority: 22.07.2022 US 202263391537 P; 30.11.2022 TW 111145823
(71) Applicant: Industrial Technology Research Institute, Chutung, Hsinchu 310401 (TW)
(72) Inventor: SHIEH, Deng-Tswen, Hsinchu City (TW); LIN, Yu-Han, Changhua County (TW); SU, Ching-Yi, Hsinchu County (TW)
(74) Representative: Michalski Hüttermann & Partner Patentanwälte mbB

(57) **Abstract**

A positive electrode and a battery employing the same are provided. The positive electrode includes a positive electrode active layer and a first layer, wherein the first layer is disposed on the positive electrode active layer, and the first layer includes a lithium-iron-phosphorus-containing oxide and a first binder. The electric resistance ratio of the first layer to the positive electrode active layer is greater than or equal to 100.

## Description

### TECHNICAL FIELD

The disclosure relates to a positive electrode and a battery employing the same.

### BACKGROUND

Lithium-ion secondary batteries are mainstream commercial products, and they are presently being developed to be light-weight, low-volume, and safer, and to have a higher energy capacity and a longer cycle life.

Internal short circuit is a phenomenon that seriously affects the safety of lithium batteries. When an internal short circuit occurs, the resistance at the short circuit point approaches zero, causing the energy contained in the battery to flow through in the form of a large current and instantaneously release tremendous heat energy. This triggers a series of safety issues, including liquid leakage, battery swelling, heating, fuming, burning, or explosion, severely limiting their usability.

The causes of short circuit include the changes of internal stress conditions within the battery, such as the growth of needle-like lithium dendrites or compression on the battery, which lead to the conduction between the positive and negative electrodes inside the battery. If the occurrence of a chain reaction during a short circuit in the battery can be mitigated (i.e., extending the duration of energy release), the safety of the battery can be enhanced.

Therefore, novel materials and assembly designs of the battery electrode are called for to solve the aforementioned problems.

### SUMMARY

According to embodiments of the disclosure, the disclosure provides a positive electrode. The positive electrode includes a positive electrode active layer and a first layer, wherein the first layer is disposed on the positive electrode active layer. The first layer may include a lithium-iron-phosphorus-containing oxide and a first binder, and the electric resistance ratio of the first layer to the positive electrode active layer is greater than or equal to 100.

According to some embodiments of the disclosure, the disclosure provides a positive electrode. The positive electrode includes a positive electrode active layer, a first layer, and a second layer, wherein the first layer may be disposed on the positive electrode active layer, and the second layer may be disposed on the first layer. The first layer includes a lithium-iron-phosphorus-containing oxide and a first binder, and the second layer includes a stabilized lithium metal particle.

According to embodiments of the disclosure, the disclosure also provides a battery. The battery includes the positive electrode of the disclosure, a separator, and a negative electrode, wherein the negative electrode is separated from the positive electrode via the separator.

### BRIEF DESCRIPTION OF THE DRAWINGS

The present invention can be more fully understood by reading the subsequent detailed description and examples with references made to the accompanying drawings, wherein:
FIG. 1 is a cross-sectional view of the positive electrode of a battery according to embodiments of the disclosure.
FIG. 2 is a cross-sectional view of the positive electrode of a battery according to another embodiment of the disclosure.
FIG. 3 is a cross-sectional view of the positive electrode of a battery according to yet another embodiment of the disclosure.
FIG. 4 is a schematic view of the battery including the positive electrode according to embodiments of the disclosure.
FIG. 5 is a schematic view of the battery including the positive electrode according to another embodiment of the disclosure.
FIG. 6 is a schematic view of the battery including the positive electrode according to yet another embodiment of the disclosure.

### DETAILED DESCRIPTION OF DISCLOSED EMBODIMENTS

The positive electrode and battery employing the same of the disclosure are described in detail in the following description. In the following detailed description, for purposes of explanation, numerous specific details and embodiments are set forth in order to provide a thorough understanding of the present disclosure. The specific elements and configurations described in the following detailed description are set forth in order to clearly describe the present disclosure. It will be apparent, however, that the exemplary embodiments set forth herein are used merely for the purpose of illustration, and the inventive concept may be embodied in various forms without being limited to those exemplary embodiments. In addition, the drawings of different embodiments may use like and/or corresponding numerals to denote like and/or corresponding elements in order to clearly describe the present disclosure. However, the use of like and/or corresponding numerals in the drawings of different embodiments does not suggest any correlation between different embodiments. As used herein, the term "about" in quantitative terms refers to plus or minus an amount that is general and reasonable to persons skilled in the art.

It should be noted that the elements or devices in the drawings of the disclosure may be present in any form or configuration known to those skilled in the art. In addition, the expression "a layer overlying another layer", " a layer is disposed above another layer", " a layer is disposed on another layer", and " a layer is disposed over another layer" may refer to a layer that directly contacts the other layer, and they may also refer to a layer that does not directly contact the other layer, there being one or more intermediate layers disposed between the layer and the other layer.

Moreover, the use of ordinal terms such as "first", "second", "third", etc., in the disclosure to modify an element does not by itself connote any priority, precedence, or der of one claim element over another or the temporal order in which it is formed, but are used merely as labels to distinguish one claim element having a certain name from another element having the same name (but for use of the ordinal term) to distinguish the claim elements.

The drawings described are only schematic and are non-limiting. In the drawings, the size, shape, or thickness of some of the elements may be exaggerated and not drawn on scale for illustrative purposes. The dimensions and the relative dimensions do not correspond to actual location to practice of the disclosure. The disclosure will be described with respect to particular embodiments and with reference to certain drawings but the disclosure is not limited thereto.

The disclosure provides a positive electrode (such as a positive electrode of lithium battery) and battery employing the same (such as lithium battery). According to embodiments of the disclosure, the positive electrode of the disclosure includes a positive electrode active layer and a first layer (including lithium-iron-phosphorus-containing oxide), wherein the first layer exhibits relatively high resistance and thermal stability. The first layer of the disclosure may be suitable for use in concert with the positive electrode active layer and serves as a fail-safe layer. By means of the specific resistance ratio of the first layer to the positive electrode active layer, the occurrence period of internal short circuit in the lithium battery including the positive electrode can be prolonged when the battery is overcharged. Moreover, when the lithium battery including the positive electrode experiences an internal short circuit, the release of battery energy can be slowed down (i.e. reducing the energy release rate), thereby increasing the safety of the lithium battery during use.

According to embodiments of the disclosure, the positive electrode of the disclosure includes a positive electrode active layer and a composite layer, wherein the composite layer exhibits relatively high resistance and thermal stability. The composite layer is suitable for use in concert with the positive electrode active layer and serves as a fail-safe layer. Since the composite layer includes a first layer (including lithium-iron-phosphorus-containing oxide) and a second layer (including stabilized lithium metal particle (SLMP)), the safety of the lithium battery (including the positive electrode of the disclosure) can be increased, and the discharging specific capacity of the lithium battery can be increased on the premise that the capacity retention is not reduced.

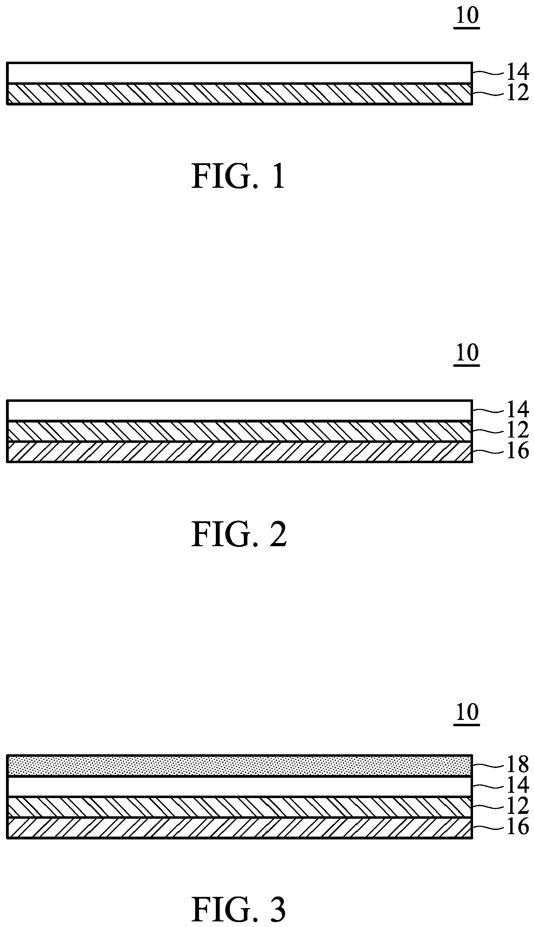

According to embodiments of the disclosure, the disclosure provides a positive electrode can serve as the positive electrode of the battery (such as the positive electrode of the lithium battery). According to embodiments of the disclosure, as shown in FIG. 1, the positive electrode 10 of the disclosure may include a positive electrode active layer 12 and a first layer 14 (such as fail-safe layer), wherein the first layer 14 may be disposed on the positive electrode active layer 12. According to embodiments of the disclosure, the positive electrode active layer 12 includes a positive electrode active material, and the first layer 14 includes a lithium-iron-phosphorus-containing oxide (such as lithium iron manganese phosphate (LMFP), lithium iron phosphate (LFP) or a combination thereof). Further, the lithium-iron-phosphorus-containing oxide may be further doped with nickel, cobalt, neodymium, praseodymium, erbium, yttrium, vanadium, molybdenum, or a combination thereof. In order to achieve the purpose of prolonging the occurrence period of internal short circuit in the battery and slowing down the release of battery energy when the battery is short-circuited, the electric resistance ratio of the first layer to the positive electrode active layer maybe greater than or equal to 100. For example, the electric resistance ratio of the first layer to the positive electrode active layer is 100 to 1×10⁸. For example, the electric resistance ratio of the first layer to the positive electrode active layer is 100 to 1×10⁶ (such as 3×10², 1×10³, 6×10⁴, or 7×10⁵). When the electric resistance ratio of the first layer to the positive electrode active layer is too low, the safety of the battery cannot be enhanced. When the electric resistance ratio of the first layer to the positive electrode active layer is too high, the performance of battery is greatly reduced due to the higher resistance of the first layer. The resistance of the first layer and the positive electrode active layer of the disclosure is measured using a four-point probe resistance meter (DU-5211 Ohm Meter, commercially available from DELTA UNITED INSTRUMENT CO. LTD). The method includes following steps. The sample was disposed in the four-point probe resistance meter. The probe was brought into contact with the sample surface under a pressure of 0.07 MPa. After contact, the system was allowed to stand for 3 seconds before measuring the resistance (ohms) via the four-point probe resistance meter.

According to embodiments of the disclosure, the thickness of the positive electrode active layer 12 is not limited and may be optionally modified by a person of ordinary skill in the field. For example, the thickness of the positive electrode active layer 12 can be about 50µm to 200µm (such as about 70µm, 100µm, 150µm or 180µm). According to embodiments of the disclosure, the thickness of the first layer 14 is not limited and may be optionally modified by a person of ordinary skill in the field. For example, the thickness of the first layer 14 can be about 1µm to 50µm (such as about 2µm, 5µm, 10µm, 20µm, 30µm or 40µm).

According to embodiments of the disclosure, the positive electrode active material may be sulfur, organic sulfide, sulfur-carbon composite, metal-containing lithium oxide, metal-containing lithium sulfide, metal-containing lithium selenide, metal-containing lithium telluride, metal-containing lithium silicide, metal-containing lithium boride, or a combination thereof, wherein the metal is selected from a group consisting of aluminum, vanadium, titanium, chromium, copper, molybdenum, niobium, iron, nickel, cobalt and manganese. According to embodiments of the disclosure, the positive electrode active material may be lithium cobalt oxide, lithium nickel oxide, lithium manganese oxide, lithium cobalt manganese oxide, lithium nickel cobalt oxide, lithium nickel manganese oxide, lithium nickel manganese cobalt oxide, lithium chromium manganese oxide, lithium nickel vanadium oxide, lithium manganese nickel oxide, lithium cobalt vanadium oxide, lithium nickel cobalt aluminum oxide, or a combination thereof. According to embodiments of the disclosure, lithium nickel manganese cobalt oxide may have a chemical structure of LiNiₓCo_{y}Mn_{z}O₂, wherein 0<x<1, 0<y<1, 0<z<1, and x+y+z=1. According to embodiments of the disclosure, lithium nickel cobalt aluminum oxide may have a chemical structure of LiNi_{0.80}Co_{0.15}Al_{0.05}O₂. According to embodiments of the disclosure, lithium cobalt oxide may have a chemical structure of LiCoO₂.

According to embodiments of the disclosure, the positive electrode active layer 12 may further include a binder, wherein the binder may include polyvinyl alcohol (PVA), polytetrafluoroethylene (PTFE), carboxymethyl cellulose, carboxymethyl cellulose sodium, polyvinylidene fluoride (PVDF), styrene-butadiene copolymer, fluorinated rubber, polyurethane, polyvinyl pyrrolidone, poly(ethyl acrylate), polyvinylchloride (PVC), polyacrylonitrile (PAN), polybutadiene, polyacrylic acid (PAA), or a combination thereof. According to embodiments of the disclosure, in the positive electrode active layer 12, the positive electrode active material may have a weight percentage of about 90wt% to 99.9wt% (such as 91wt%, 92wt%, 93wt%, 94wt%, 95wt%, 96wt%, 97wt%, 98wt% or 99wt%) and the binder may have a weight percentage of about 0.1wt% to 10wt% (such as 1wt%, 2wt%, 3wt%, 4wt%, 5wt%, 6wt%, 7wt%, 8wt% or 9wt%), based on the total weight of the positive electrode active material and the binder. According to embodiments of the disclosure, in the positive electrode active layer 12, the weight ratio of the binder to the positive electrode active material may be 0.1:99.9 to 10:90 (such as 1:99, 2:98, 3: 97, 4:96, 5:95, 6:94, 7:93, 8:92 or 9:91). According to embodiments of the disclosure, the positive electrode active layer 12 may consist of the binder and the positive electrode active material.

According to embodiments of the disclosure, the positive electrode active layer 12 may further include a conductive additive, wherein conductive additive may be conductive carbon black, conductive graphite, fluorocarbon, reduced graphene, nitrogen-doped graphite, nitrogen-doped graphene, carbon fiber, carbon nanotube or a combination thereof. According to embodiments of the disclosure, in the positive electrode active layer 12, the positive electrode active material may have a weight percentage of about 90wt% to 99.8wt% (such as 91wt%, 92wt%, 93wt%, 94wt%, 95wt%, 96wt%, 97wt%, 98wt% or 99wt%), the binder may have a weight percentage of about 0.1wt% to 6wt% (such as 1wt%, 2wt%, 3wt%, 4wt%, 5wt% or 5.5wt%), and the conductive additive may have a weight percentage of about 0.1wt% to 6wt% (such as 1wt%, 2wt%, 3wt%, 4wt%, 5wt% or 5.5wt%), based on the total weight of the positive electrode active material, the binder and the conductive additive. According to embodiments of the disclosure, in the positive electrode active layer 12, the weight ratio of the binder to the positive electrode active material may be 1:99 to 5:95 (such as 1.5:98.5, 2:98, 3: 97, 4:96 or 4.5:95.5), and the weight ratio of the conductive additive to the positive electrode active material may be 1:99 to 5:95 (such as 1.5:98.5, 2:98, 3: 97, 4:96 or 4.5:95.5). According to embodiments of the disclosure, the positive electrode active layer 12 may consist of the binder, conductive additive and the positive electrode active material.

According to embodiments of the disclosure, lithium-iron-phosphorus-containing oxide maybe lithium iron manganese phosphate. The lithium iron manganese phosphate may have a chemical structure of LiMnₓFe₁₋ₓPO₄, wherein 0≤x≤1. for example, x may be 0.51, 0.52, 0.53, 0.55, 0.60, 0.65, 0.70, 0.75, 0.80, 0.85, 0.90, 0.95, 0.97, 0.98 or 0.99. According to embodiments of the disclosure, the particle size of lithium-iron-phosphorus-containing oxide is not limited and may be optionally modified by a person of ordinary skill in the field, may be 1nm to 100µm, such as 10nm, 50nm, 100nm, 500nm, 1µm, 10µm, 50µm or 80µm.

According to embodiments of the disclosure, the first layer 14 may further include a first binder, wherein the first binder may include polyvinyl alcohol (PVA), polytetrafluoroethylene (PTFE), carboxymethyl cellulose, carboxymethyl cellulose sodium, polyvinylidene fluoride (PVDF), styrene-butadiene copolymer, fluorinated rubber, polyurethane, polyvinyl pyrrolidone, poly(ethyl acrylate), polyvinylchloride (PVC), polyacrylonitrile (PAN), polybutadiene, polyacrylic acid (PAA), or a combination thereof. According to embodiments of the disclosure, in the first layer 14, the lithium-iron-phosphorus-containing oxide may have a weight percentage of about 90wt% to 99.9wt% (such as 91wt%, 92wt%, 93wt%, 94wt%, 95wt%, 96wt%, 97wt%, 98wt% or 99wt%) and the first binder may have a weight percentage of about 0. 1wt% to 10wt% (such as 1wt%, 2wt%, 3wt%, 4wt%, 5wt%, 6wt%, 7wt%, 8wt% or 9wt%), based on the total weight of the lithium-iron-phosphorus-containing oxide and the first binder. According to embodiments of the disclosure, in the first layer 14, the weight ratio of the first binder to the lithium-iron-phosphorus-containing oxide may be 1:99 to 5:95 (such as 1.5:98.5, 2:98, 3: 97, 4:96 or 4.5:95.5). According to embodiments of the disclosure, the first layer 14 may consist of the first binder and the lithium-iron-phosphorus-containing oxide.

According to embodiments of the disclosure, the first layer 14 may further include an inorganic powder, wherein the inorganic powder may be a conductive powder, metal oxide, or a combination thereof. According to embodiments of the disclosure, the conductive powder may be a metal, an alloy of the metal, conductive carbon black, conductive graphite, fluorocarbon, reduced graphene, nitrogen-doped graphite, nitrogen-doped graphene, carbon fiber, carbon nanotube, or a combination thereof, wherein the metal may be zirconium, chromium, molybdenum, tungsten, manganese, iron, osmium, cobalt, nickel, palladium, platinum, copper, silver, gold, zinc, indium, tin, lead or aluminum. According to embodiments of the disclosure, the metal oxide may be aluminum oxide, zirconium oxide, zinc oxide, silicon oxide, tin oxide, or a combination thereof. According to embodiments of the disclosure, the particle size of the inorganic powder is not limited and may be optionally modified by a person of ordinary skill in the field, may be 1nm to 100µm, such as 10nm, 50nm, 100nm, 500nm, 1µm, 10µm, 50µm or 80µm. According to embodiments of the disclosure, in the first layer 14, the lithium-iron-phosphorus-containing oxide may have a weight percentage of about 90wt% to 99.8wt% (such as 91wt%, 92wt%, 93wt%, 94wt%, 95wt%, 96wt%, 97wt%, 98wt% or 99wt%), the first binder may have a weight percentage of about 0.1wt% to 6wt% (such as 1wt%, 2wt%, 3wt%, 4wt%, 5wt% or 6wt%), and the inorganic powder may have a weight percentage of about 0.1wt% to 4wt% (such as 0. 1wt%, 0.2wt%, 0.3wt%, 0.4wt%, 0.5wt%, 0.6wt%, 0.7wt%, 0.8wt%, 1wt%, 2wt% or 3wt%), based on the total weight of the lithium-iron-phosphorus-containing oxide, the first binder and inorganic powder. According to embodiments of the disclosure, in the first layer 14, the weight ratio of the first binder to the lithium-iron-phosphorus-containing oxide may be 1:99 to 5:95 (such as 1.5:98.5, 2:98, 3: 97, 4:96 or 4.5:95.5), and the weight ratio of the inorganic powder to the lithium-iron-phosphorus-containing oxide may be 0.1:99.9 to 1:99 (such as 0.2:99.8, 0.5:99.5 or 0.8:99.2). According to embodiments of the disclosure, the first layer 14 may consist of the first binder, the inorganic powder and the lithium-iron-phosphorus-containing oxide.

According to embodiments of the disclosure, as shown in FIG. 2, the positive electrode 10 of the disclosure may include the positive electrode active layer 12, the first layer 14, and a positive electrode current-collecting layer 16, wherein the positive electrode active layer 12 may be disposed on the positive electrode current-collecting layer 16, and the first layer 14 may be disposed on the positive electrode active layer 12.

According to embodiments of the disclosure, the method for preparing the positive electrode 10 shown in FIG. 2 may include following steps. First, the components (such as the positive electrode active material, conductive additive and binder) of the positive electrode active layer are dispersed in a solvent (such as 1-methyl-2-pyrrolidinone (NMP), N, N-dimethylformamide (DMF), N, N-dimethylacetamide (DMAc), pyrrolidone, N-dodecylpyrrolidone, γ-butyrolactone or a combination thereof), obtaining a positive electrode active layer slurry. The positive electrode active layer slurry may have a solid content of about 30wt% to 80wt%. Next, a positive electrode current-collecting layer 16 is provided. Next, a coating of the positive electrode slurry is formed on the positive electrode current-collecting layer 16 via a coating process. Next, the coating is subjected to a drying process (with a temperature of 90°C to 180°C), obtaining the positive electrode active layer 12. Next, the components (such as lithium-iron-phosphorus-containing oxide, inorganic powder and the first binder) of the first layer are dispersed in a solvent, obtaining a first slurry. Next, a coating of the first slurry is formed on the positive electrode active layer 12 via a coating process. Next, the coating is subjected to a drying process (with a temperature of about 90°C to 180°C), obtaining the first layer 14. The coating process may be screen printing, spin coating, bar coating, blade coating, roller coating, solvent casting or dip coating.

The thickness of the positive electrode current-collecting layer 16 is not limited and may be optionally modified by a person of ordinary skill in the field. For example, the thickness of the positive electrode current-collecting layer 16 may be about 5µm to 200µm (such as about 10µm, 30µm, 50µm, 60µm, 70µm, 80µm, 90µm, 100µm or 150µm).

According to embodiments of the disclosure, the positive electrode current-collecting layer 16 may be conductive carbon substrate, metal foil or metal material with a porous structure, such as carbon cloth, carbon felt, carbon paper, copper foil, nickel foil, aluminum foil, nickel mesh, copper mesh, molybdenum mesh, nickel foam, copper foam, or molybdenum foam. According to embodiments of the disclosure, metal material with a porous structure may have a porosity about 10% to 99.9% (such as 20%, 30%, 40%, 50%, 60%, 70%, 80% or 90%).

According to embodiments of the disclosure, As shown in FIG. 3, the positive electrode 10 of the disclosure may include the positive electrode active layer 12, the first layer 14, the positive electrode current-collecting layer 16, and a second layer 18, wherein the positive electrode active layer 12 may be disposed on the positive electrode current-collecting layer 16, the first layer 14 may be disposed on the positive electrode active layer 12, and the second layer 18 may be disposed on the first layer 14.

According to embodiments of the disclosure, the thickness of the second layer 18 is not limited and may be optionally modified by a person of ordinary skill in the field. For example, the thickness of the second layer 18 may be about 10nm to 1µm (such as about 20nm, 30nm, 50nm, 80nm, 100nm, 200nm, 300nm, 500nm, 600nm, 800nm or 900nm).

According to embodiments of the disclosure, the second layer 18 includes an inorganic powder, wherein the inorganic powder may be a metal oxide, a stabilized lithium metal particle, or a combination thereof. According to embodiments of the disclosure, the metal oxide may be aluminum oxide, zirconium oxide, zinc oxide, silicon oxide, tin oxide, or a combination thereof. According to embodiments of the disclosure, the stabilized lithium metal particle substantially has a core-shell structure, includes a core and a shell encapsulated the core. The core may include lithium metal or lithium metal alloy. The shell includes lithium salt and surrounds and encapsulates the core. The shell may be sealed, thereby preventing or substantially inhibiting water or air (including oxygen) from contacting the core and reacting with it. According to embodiments of the disclosure, the core includes elemental lithium. According to embodiments of the disclosure, the core may include a lithium alloy, wherein the lithium alloy includes lithium and at least one element selected from a group of aluminum, silicon, germanium, tin, lead, and bismuth. The shell includes lithium salt, wherein the lithium salt may include lithium complex, such as LiPF₆, LiBF₄, LiClO₄, LiAsF₆, LiF₃SO₃, Li₂CO₃ or a combination thereof. The stabilized lithium metal particles exhibit substantial non-reactivity or non-flammability when exposed to air, oxygen, or water. The stabilized lithium metal particles can exhibit chemical inertness under the following conditions: for example, exposure to the surrounding environment, air, oxygen, or high-temperature water vapor, wherein the high temperature may be 50°C, 100°C, 150°C, or more than 200°C. According to embodiments of the disclosure, the particle size of the inorganic powder is not limited and may be optionally modified by a person of ordinary skill in the field. The particle size of the inorganic powder may be 1nm to 1µm, such as 5nm, 10nm, 20nm, 30nm, 50nm, 80nm, 100nm, 200nm, 300nm, 500nm, 600nm, 800nm or 900nm.

According to embodiments of the disclosure, the second layer 18 may further include a second binder, wherein the second binder may include polyvinyl alcohol (PVA), polytetrafluoroethylene (PTFE), carboxymethyl cellulose, carboxymethyl cellulose sodium, polyvinylidene fluoride (PVDF), styrene-butadiene copolymer, fluorinated rubber, polyurethane, polyvinyl pyrrolidone, poly(ethyl acrylate), polyvinylchloride (PVC), polyacrylonitrile (PAN), polybutadiene, polyacrylic acid (PAA), or a combination thereof. According to embodiments of the disclosure, in the second layer 18, the inorganic powder may have a weight percentage of about 90wt% to 99.9wt% (such as 91wt%, 92wt%, 93wt%, 94wt%, 95wt%, 96wt%, 97wt%, 98wt% or 99wt%) and the second binder may have a weight percentage of about 0.1wt% to 10wt% (such as 1wt%, 2wt%, 3wt%, 4 wt%, 5wt%, 6wt%, 7wt%, 8wt% or 9wt%), based on the total weight of the inorganic powder and the second binder. According to embodiments of the disclosure, in the second layer 18, the weight ratio of the second binder to the inorganic powder may be 0.1 :99.9 to 10:90(such as 1:99, 2:98, 3: 97, 4:96, 5:95, 6:94, 7:93, 8:92 or 9:91). According to embodiments of the disclosure, the second layer 18 may consist of the second binder and the inorganic powder.

According to embodiments of the disclosure, as shown in FIG. 3, the positive electrode 10 of the disclosure sequentially includes the positive electrode current-collecting layer 16, the positive electrode active layer 12, the first layer 14, and the second layer 18, wherein the first layer 14 includes lithium-iron-phosphorus-containing oxide (such as lithium iron manganese phosphate (LMFP)), and the second layer includes stabilized lithium metal particle (SLMP). According to embodiments of the disclosure, the lamination including the first layer 14 and the second layer 18 may serve as a fail-safe layer. According to embodiments of the disclosure, the first layer 14 may include the first binder and the lithium-iron-phosphorus-containing oxide. According to embodiments of the disclosure, the first layer 14 may include the first binder, the inorganic powder, and the lithium-iron-phosphorus-containing oxide. According to embodiments of the disclosure, the first layer 14 may consist of the first binder and the lithium-iron-phosphorus-containing oxide. According to embodiments of the disclosure, the first layer 14 may consist of the first binder, the inorganic powder and the lithium-iron-phosphorus-containing oxide. According to embodiments of the disclosure, the second layer 18 may include the second binder and stabilized lithium metal particle. According to embodiments of the disclosure, the second layer 18 may consist of the second binder and stabilized lithium metal particle. According to embodiments of the disclosure, in the second layer 18, the stabilized lithium metal particle may have a weight percentage of about 90wt% to 99.9wt% (such as 91wt%, 92wt%, 93wt%, 94wt%, 95wt%, 96wt%, 97wt%, 98wt% or 99wt%) and the second binder may have a weight percentage of about 0.1wt% to 10wt% (such as 1wt%, 2wt%, 3wt%, 4wt%, 5wt%, 6wt%, 7wt%, 8wt% or 9wt%), based on the total weight of the stabilized lithium metal particle and the second binder. According to embodiments of the disclosure, in the second layer 18, the weight ratio of the second binder to the stabilized lithium metal particle may be 0.1:99.9 to 10:90 (such as 1:99, 2:98, 3: 97, 4:96, 5:95, 6:94, 7:93, 8:92 or 9:91).

According to embodiments of the disclosure, the method for preparing the positive electrode 10 as shown in FIG. 3 may include following steps. First, the components (such as positive electrode active material, conductive additive and the binder) of the positive electrode active layer are dispersed in a solvent (such as 1-methyl-2-pyrrolidinone (NMP), N, N-dimethylformamide (DMF), N, N-dimethylacetamide (DMAc), pyrrolidone, N-dodecylpyrrolidone, γ- butyrolactone or a combination thereof), obtaining a positive electrode active layer slurry, the positive electrode active layer slurry may have a solid content of 30wt% to 80wt%. Next, a positive electrode current-collecting layer 16 is provided. Next, the positive electrode active layer slurry is formed on the positive electrode current-collecting layer 16 via a coating process. Next, the coating is subjected to a drying process (with a temperature of about 90°C to 180°C), obtaining the positive electrode active layer 12. Next, the components (such as lithium-iron-phosphorus-containing oxide and the first binder) of the first layer are dispersed in a solvent, obtaining a first slurry. Next, the first slurry is formed on the positive electrode active layer 12 via a coating process. Next, the coating is subjected to a drying process (with a temperature of about 90°C to 180°C), obtaining the first layer 14. Next, the components (such as the stabilized lithium metal particle) of the second layer are disposed on the first layer 14 to form a powder layer. Next, the powder layer is applied to a pressure, obtaining the second layer 18. The method for applying pressure may be a calendaring process or a rolling process. In some embodiments, the method for forming the second layer 18 may include following steps after forming the first layer 14. The components (such as the stabilized lithium metal particle and the second binder) of the second layer are dispersed in a solvent, obtaining a second slurry. Next, the second slurry is formed on the first layer 14 via a coating process. Next, the coating is subjected to a drying process (with a temperature of about 90°C to 180°C), obtaining the second layer 18. The coating process may be screen printing, spin coating, bar coating, blade coating, roller coating, solvent casting or dip coating.

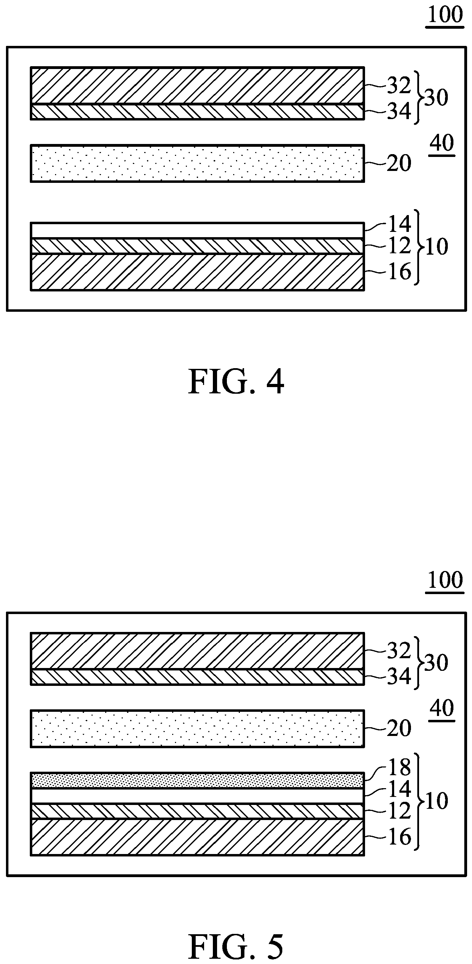

According to embodiments of the disclosure, as shown in FIG. 4, the disclosure also provides a battery 100, such as lithium battery, lithium ion battery or lithium metal battery. The battery 100 includes the positive electrode 10 as shown in FIG. 2, a separator 20, and a negative electrode 30. In particle, the negative electrode 30 is separated from the positive electrode 10 via the separator 20. According to embodiments of the disclosure, the positive electrode 10 may directly contact the separator 20 and/or the negative electrode 30 may directly contact the separator 20. According to embodiments of the disclosure, the positive electrode 10 may separate from the separator 20 by a specific distance and/or the negative electrode 30 may separate from the separator 20 by a specific distance. According to embodiments of the disclosure, the battery 100 may further include a liquid electrolyte 40, and the liquid electrolyte 40 is disposed between the positive electrode 10 and negative electrode 30. Namely, the structure stacked by the positive electrode 10, separator 20 and the negative electrode 30 is immersed in the liquid electrolyte 40 (i.e. the battery 100 is filled with the liquid electrolyte). According to some embodiments of the disclosure, the positive electrode active layer 12 of the disclosure may be disposed between the separator 20 and the positive electrode current-collecting layer 16, the first layer 14 of the disclosure may be disposed between the separator 20 and the positive electrode active layer 12, and the first layer 14 of the disclosure may directly contact the separator 20. According to embodiments of the disclosure, the battery 100 of the disclosure may consist of the positive electrode 10, the separator 20, the negative electrode 30, and the liquid electrolyte 40. According to embodiments of the disclosure, the battery 100 may include the positive electrode 10 as shown in FIG. 3, the separator 20, the negative electrode 30, and the liquid electrolyte 40, as shown in FIG. 5.

According to embodiments of the disclosure, the separator 20 may include insulating material, such as polyethylene (PE), polypropylene (PP), polytetrafluoroethylene (PTFE), polyamide, polyvinylchloride (PVC), poly(vinylidene fluoride), polyaniline, polyimide, polyethylene terephthalate, polystyrene (PS), cellulose, or a combination thereof. For example, the separator 20 may be PE/PP/PE multilayer composite structure. According to embodiments of the disclosure, the separator may have a porous structure. Namely, the pores of the separator are uniformly distributed among the whole separator.

According to embodiments of the disclosure, the liquid electrolyte 40 may include solvent and lithium salt (or lithium-containing compound). According to embodiments of the disclosure, the concentration of the lithium salt in the solvent may be about 0.8M to 1.6M, such as about 0.9M, 1.0M, 1.1M, 1.2M, 1.3M, 1.4M, or 1.5M. According to embodiments of the disclosure, the solvent may be organic solvent, such as ester solvent, ketone solvent, carbonate solvent, ether solvent, alkane solvent, amide solvent, or a combination thereof. According to embodiments of the disclosure, the solvent may be 1,2-diethoxyethane, 1,2-dimethoxyethane, 1,2-dibutoxyethane, tetrahydrofuran (THF), 2-methyl tetrahydrofuran, dimethylacetamide (DMAc), 1-methyl-2-pyrrolidinone (NMP), methyl acetate, ethyl acetate, methyl butyrate, ethyl butyrate, methyl propionate, ethyl propionate, propyl acetate (PA), γ-butyrolactone (GBL), ethylene carbonate(EC), propylene carbonate (PC), diethyl carbonate (DEC), ethylmethyl carbonate (EMC), dimethyl carbonate (DMC), vinylene carbonate, butylene carbonate, dipropyl carbonate, fuoroethylene carbonate, 1,3-propane sultone, or a combination thereof. According to embodiments of the disclosure, the lithium salt may be lithium hexafluorophosphate (LiPF₆), lithium perchlorate(lithium perchlorate (LiClO₄), bis(fluorosulfonyl)imide lithium (LiN(SO₂F)₂) (LiFSI), lithium difluoro(oxalato)borate (LiBF₂(C₂O₄)) (LiDFOB), lithium tetrafluoroborate (LiBF₄), lithium trifluoromethanesulfonate (LiSO₃CF₃), bis(trifluoromethane)sulfonimide lithium (LiN(SO₂CF₃)₂) (LiTFSI), lithium bis perfluoroethanesulfonimide (LiN(SO₂CF₂CF₃)₂), lithium hexafluoroarsenate (LiAsF₆), lithium hexafluoroantimonate (LiSbF₆), lithium tetrachloroaluminate (LiAlCl₄), lithium tetrachlorogallate (LiGaCl₄), lithium nitrate (LiNO₃), tris(trifluoromethanesulfonyl)methyllithium (LiC(SO₂CF₃)₃), lithium thiocyanate hydrate (LiSCN), LiO₃SCF₂CF₃, LiC₆F₅SO₃, LiO₂CCF₃, lithiumfluorosulfonate (LiSO₃F), lithium tetrakis(pentafluorophenyl)borate (LiB(C₆H₅)₄), lithium bis(oxalato)borate (LiB(C₂O₄)₂) (LiBOB), or a combination thereof.

According to embodiments of the disclosure, the negative electrode 30 may include a negative electrode current-collecting layer 32, and a negative electrode active layer 34 disposed on the negative electrode current-collecting layer 32, wherein the negative electrode active layer 34 includes a negative electrode active material. In some embodiments, the negative electrode active layer 34 may further include a binder. the binder may include polyvinyl alcohol (PVA), polytetrafluoroethylene (PTFE), carboxymethyl cellulose, carboxymethyl cellulose sodium, polyvinylidene fluoride (PVDF), styrene-butadiene copolymer, fluorinated rubber, polyurethane, polyvinyl pyrrolidone, poly(ethyl acrylate), polyvinylchloride (PVC), polyacrylonitrile (PAN), polybutadiene, polyacrylic acid (PAA), or a combination thereof. According to embodiments of the disclosure, the negative electrode 30 may consist of the negative electrode current-collecting layer 32 and the negative electrode active layer 34. In addition, according to embodiments of the disclosure, the negative electrode 30 may consist of the negative electrode current-collecting layer 32.

According to embodiments of the disclosure, in the negative electrode active layer 34, the negative electrode active material may have a weight percentage of about 90wt% to 99.9wt% (such as 91wt%, 92wt%, 93wt%, 94wt%, 95wt%, 96wt%, 97wt%, 98wt% or 99wt%) and the binder may have a weight percentage of about 0.1wt% to 10wt% (such as 1wt%, 2wt%, 3wt%, 4wt%, 5wt%, 6wt%, 7wt%, 8wt% or 9wt%), based on the total weight of the negative electrode active material and the binder. According to embodiments of the disclosure, in the negative electrode active layer 34, the weight ratio of the binder to the negative electrode active material may be 0.1:99.9 to 10:90 (such as 1:99, 2:98, 3: 97, 4:96, 5:95, 6:94, 7:93, 8:92 or 9:91). According to embodiments of the disclosure, the negative electrode active layer 34 may consist of the binder and the negative electrode active material. According to embodiments of the disclosure, the negative electrode current-collecting layer 32 may be conductive carbon substrate, metal foil or metal material with a porous structure, such as carbon cloth, carbon felt, carbon paper, copper foil, nickel foil, aluminum foil, nickel mesh, copper mesh, molybdenum mesh, nickel foam, copper foam, or molybdenum foam. According to embodiments of the disclosure, metal material with a porous structure may have a porosity of about 10% to 99.9% (such as 20%, 30%, 40%, 50%, 60%, 70%, 80% or 90%).

According to some embodiments of the disclosure, the negative electrode active layer 34 of the disclosure may be disposed between the separator 20 and the negative electrode current-collecting layer 32. According to embodiments of the disclosure, the negative electrode active material includes carbon material, lithium, transition metal oxide, lithium-containing compound, silicon-containing material, or a combination thereof. According to embodiments of the disclosure, the carbon material may include metastable phase spherical carbon (MCMB), vapor grown carbon fiber (VGCF), carbon nanotube (CNT), coke, carbon black, graphite, graphene, acetylene black, carbon fiber, or a combination thereof. According to embodiments of the disclosure, the lithium-containing compound may include LiAl, LiMg, LiZn, Li₃Bi, Li₃Cd, Li₃Sb, Li₄Si, Li_{4.4}Pb, Li₄.₄Sn, LiC₆, Li₃FeN₂, Li_{2.6}Co_{0.4}N, or Li_{2.6}Cu_{0.4}N. According to embodiments of the disclosure, the silicon-containing material may include carbon-modified silicon oxide, silicon carbide or pure-silicon material. According to embodiments of the disclosure, the transition metal oxide may include Li₄Ti₅O₁₂ or TiNb₂O₇.

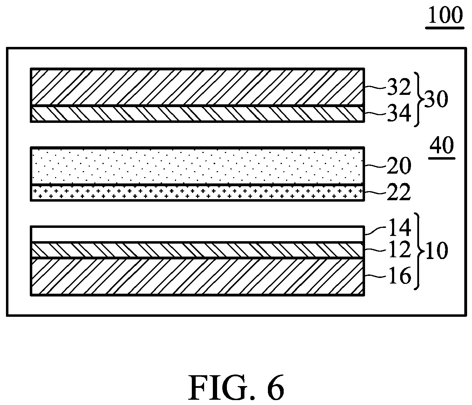

According to embodiments of the disclosure, as shown in FIG. 6, when the battery 100 of the disclosure includes the positive electrode 10 as shown in FIG. 2, the battery 100 may further include a metal oxide layer 22 disposed on the separator 20, and the metal oxide layer 22 is disposed between the separator 20 and the positive electrode 10. By means of the combination of the metal oxide layer 22 and the positive electrode 10 of the disclosure, the occurrence period of internal short circuit in the lithium battery including the positive electrode can be prolonged when the battery is overcharged. Moreover, when the lithium battery including the positive electrode experiences an internal short circuit, the release of battery energy can be slowed down (i.e. reducing the energy release rate), thereby increasing the safety of the lithium battery during use.

According to embodiments of the disclosure, the metal oxide layer 22 may include metal oxide powder, such as aluminum oxide, zirconium oxide, zinc oxide, silicon oxide, tin oxide, or a combination thereof. According to embodiments of the disclosure, the particle size of the metal oxide powder is not limited and may be optionally modified by a person of ordinary skill in the field. The particle size of the metal oxide powder may be 1nm to 5µm, such as 10nm, 50nm, 100nm, 500nm, 1µm or 3µm. According to embodiments of the disclosure, the metal oxide layer 22 may further include a binder, wherein the binder may include polyvinyl alcohol (PVA), polytetrafluoroethylene (PTFE), carboxymethyl cellulose, carboxymethyl cellulose sodium, polyvinylidene fluoride (PVDF), styrene-butadiene copolymer, fluorinated rubber, polyurethane, polyvinyl pyrrolidone, poly(ethyl acrylate), polyvinylchloride (PVC), polyacrylonitrile (PAN), polybutadiene, polyacrylic acid (PAA), or a combination thereof. According to embodiments of the disclosure, in the metal oxide layer 22, the metal oxide powder may have a weight percentage of about 90wt% to 99.9wt% (such as 91wt%, 92wt%, 93wt%, 94wt%, 95wt%, 96wt%, 97wt%, 98wt% or 99wt%) and the binder may have a weight percentage of about 0. 1wt% to 10wt% (such as 1wt%, 2wt%, 3wt%, 4wt%, 5wt%, 6wt%, 7wt%, 8wt% or 9wt%), based on the total weight of the metal oxide powder and the binder. According to embodiments of the disclosure, in the metal oxide layer 22, the weight ratio of the binder to the metal oxide powder may be 0.1 :99.9 to 10:90 (such as 1:99, 2:98, 3: 97, 4:96, 5:95, 6:94, 7:93, 8:92 or 9:91). According to embodiments of the disclosure, the metal oxide layer 22 may consist of the binder and the metal oxide powder.

According to embodiments of the disclosure, the thickness of the metal oxide layer 22 is not limited and may be optionally modified by a person of ordinary skill in the field. For example, the thickness of the metal oxide layer 22 may be about 1µm to 10µm (such as about 2µm, 3µm, 4µm, 5µm, 6µm or 8µm).

Below, exemplary embodiments will be described in detail with reference to the accompanying drawings so as to be easily realized by a person having ordinary knowledge in the art. The inventive concept may be embodied in various forms without being limited to the exemplary embodiments set forth herein. Descriptions of well-known parts are omitted for clarity, and like reference numerals refer to like elements throughout.

### EXAMPLE

### Example 1

96 parts by weight of lithium nickel manganese cobalt oxide (with a chemical structure of LiNi_{0.6}Mn_{0.2}Co_{0.2}O₂) (commercially available from Ningbo Ronbay New Energy Technology Co., Ltd. with a trade number of NMC622), 2 parts by weight conductive carbon black (commercially available from Timcal with a trade number of Super-P), and 2 parts by weight polyvinylidene fluoride (PVDF) binder (with a trade number of PVDF-5130, commercially available from Solvay) were uniformly dispersed in 1-methyl-2-pyrrolidinone (NMP), obtaining a positive electrode active layer slurry. Next, the positive electrode active layer slurry was coated on an aluminum foil (serving as positive electrode current-collecting layer) (commercially available from An Chuan Enterprise Co., Ltd., with a thickness of 12µm). After drying, a positive electrode active layer was obtained (disposed on the positive electrode current-collecting layer) (with a thickness of about 65µm and an area weight of about 19mg/cm²). The resistance of the obtained positive electrode active layer was measured using a four-point probe resistance meter, and the resistance of the positive electrode active layer was about 0.00852.

Next, 97 parts by weight of lithium iron manganese phosphate (LMFP) (commercially available from HCM CO., LTD. with a trade number of GE), 0.1 parts by weight conductive carbon black (commercially available from Timcal with a trade number of Super-P), and 2.9 parts by weight polyvinylidene fluoride (PVDF) binder (with a trade number of PVDF-5130, commercially available from Solvay) were uniformly dispersed in 1-methyl-2-pyrrolidinone (NMP), obtaining a lithium iron manganese phosphate slurry. Next, the lithium iron manganese phosphate slurry was coated on the positive electrode active layer. After drying, a first layer was obtained (disposed on the positive electrode active layer) (with a thickness about 18µm and an area weight of about 4mg/cm²), wherein the lamination of the positive electrode current-collecting layer, the positive electrode active layer, and the first layer served as the positive electrode. The resistance of the obtained first layer was measured using a four-point probe resistance meter, and the resistance of the first layer was about 480Ω. After measuring, the electric resistance ratio of the first layer to the positive electrode active layer was of about 6 × 10⁴.

Next, a copper foil (commercially available from Chang Chun Group with a trade number of BFR-F) (serving negative electrode) and a polyethylene (PE) separator (commercially available from Asahi Kasei with a trade number of N9620) (with a thickness of about 16µm) were provided. Next, the negative electrode, separator and positive electrode were placed in sequence (the first layer of the positive electrode was oriented toward the separator), and sealed within an aluminum foil cell (with a size of 5mm (thickness) × 60mm (width) × 80mm (length), and then a liquid electrolyte was injected into the aluminum foil cell to obtain a battery. The liquid electrolyte included LiPF₆ and solvent, wherein the solvent was ethylene carbonate (EC) and diethyl carbonate (DEC), the volume ratio of EC to DEC was 1:1, and the concentration of LiPF₆ was 1.1M.

Next, the battery was charged at 1C charging rate to result in overcharging, and the phenomena were recorded when the battery reached a charge of 19V. The results are shown in Table 1.

### Comparative Example 1

The lamination of the positive electrode current-collecting layer and the positive electrode active layer of Example 1 was provided.

Next, a copper foil (commercially available from Chang Chun Group with a trade number of BFR-F) (serving negative electrode) and a polyethylene (PE) separator (commercially available from Asahi Kasei with a trade number of N9620) (with a thickness of about 16µm) were provided. Next, the negative electrode, separator and positive electrode were placed in sequence (the first layer of the positive electrode was oriented toward the separator), and sealed within an aluminum foil cell (with a size of 5mm (thickness) × 60mm (width) × 80mm (length), and then a liquid electrolyte was injected into the aluminum foil cell to obtain a battery. The liquid electrolyte included LiPF₆ and solvent, wherein the solvent was ethylene carbonate (EC) and diethyl carbonate (DEC), the volume ratio of EC to DEC was 1:1, and the concentration of LiPF₆ was 1.1M.

Next, the battery was charged at 1C charging rate to result in overcharging, and the phenomena were recorded when the battery reached a charge of 19V. the results are shown in Table 1.

**Table 1**

| | time for charging to 19V (sec) | phenomenon |
|---|---|---|
| Example 1 | ∼10156 | The battery did not explode |
| Comparative Example 1 | ∼9600 | The battery short-circuited, exploded and burned |

As shown in Table 1, in comparison with the battery of Comparative Example 1, when the battery (i.e. the battery of Example 1) employed the positive electrode of the disclosure (having a lithium iron manganese phosphate disposed on the positive electrode active layer), the period for charging the battery to 19V was prolonged, and the battery can still maintain at 19V during continuously charging after charging the battery to 19V, thereby preventing the battery from exploding.

### Example 2

The positive electrode of Example 1, a copper foil (with a trade number of BFR-F, commercially available from Chang Chun Group) (serving as negative electrode) and a separator with an aluminum oxide layer (commercially available from BenQ, with a thickness about 18µm, wherein the thickness of aluminum oxide layer was 2µm).

Next, the negative electrode, separator with aluminum oxide layer, and positive electrode were placed in sequence (the first layer of the positive electrode was oriented toward the aluminum oxide layer), and sealed within an aluminum foil cell (with a size of 5mm (thickness) × 60mm (width) × 80mm (length), and then a liquid electrolyte was injected into the aluminum foil cell to obtain a battery. The liquid electrolyte included LiPF₆ and solvent, wherein the solvent was ethylene carbonate (EC) and diethyl carbonate (DEC), the volume ratio of EC to DEC was 1:1, and the concentration of LiPF₆ was 1. 1M.

Next, the battery was charged at 1C charging rate to result in overcharging, and the phenomena were recorded when the battery reached a charge of 19V. the results are shown in Table 2.

### Comparative Example 2

The lamination of the positive electrode current-collecting layer and the positive electrode active layer of Example 1 was provided. A copper foil (with a trade number of BFR-F, commercially available from Chang Chun Group) (serving as negative electrode) and the separator having aluminum oxide layer of Example 2 were provided.

Next, the negative electrode, separator with aluminum oxide layer, and positive electrode were placed in sequence (the first layer of the positive electrode was oriented toward the aluminum oxide layer), and sealed within an aluminum foil cell (with a size of 5mm (thickness) × 60mm (width) × 80mm (length), and then a liquid electrolyte was injected into the aluminum foil cell to obtain a battery. The electrolyte liquid included LiPF₆ and solvent, wherein the solvent was ethylene carbonate (EC) and diethyl carbonate (DEC), the volume ratio of EC to DEC was 1:1, and the concentration of LiPF₆ was 1. 1M.

Next, the battery was charged at 1C charging rate to result in overcharging, and the phenomena were recorded when the battery reached a charge of 19V. The results are shown in Table 2.

**Table 2**

| | time for charging to 19V (sec) | phenomenon |
|---|---|---|
| Example 2 | ∼7390 | The battery did not explode (the charging time was prolonged by 590 seconds in comparison with Comparative Example 2) |
| Comparative Example 2 | ∼6800 | The battery did not explode |

As shown in Table 2, in comparison with the battery of Comparative Example 2, when the battery (i.e. the battery of Example 2) employed the positive electrode of the disclosure (having a lithium iron manganese phosphate layer disposed on the positive electrode active layer), the period for charging the battery to 19V was prolonged, and the battery can still maintain at 19V during continuously charging after charging the battery to 19V, thereby preventing the battery from exploding.

### Example 3

96 parts by weight of lithium nickel manganese cobalt oxide (with a chemical structure of LiNi_{0.83∼0.85}Mn_{0.4∼0.5}Co_{0.11∼0.12}O₂ (commercially available from Ningbo Ronbay New Energy Technology Co., Ltd. with a trade number of NMC811), 2 parts by weight conductive carbon black (commercially available from Timcal with a trade number of Super-P), and 2 parts by weight polyvinylidene fluoride (PVDF) binder (with a trade number of PVDF-5130, commercially available from Solvay) were uniformly dispersed in 1-methyl-2-pyrrolidinone (NMP), obtaining a positive electrode active layer slurry. Next, the positive electrode active layer slurry was coated on an aluminum foil (serving as positive electrode current-collecting layer) (commercially available from An Chuan Enterprise Co., Ltd., with a thickness of 12µm). After drying, a positive electrode active layer was obtained (disposed on the positive electrode current-collecting layer) (with a thickness of about 85µm, and an area weight of about 19mg/cm²). The resistance of the obtained positive electrode active layer was measured using a four-point probe resistance meter, and the resistance of the positive electrode active layer was about0.009Q.

Next, 97 parts by weight of lithium iron manganese phosphate (LMFP) (commercially available from HCM CO., LTD. with a trade number of GE), 0.1 parts by weight conductive carbon black (commercially available from Timcal with a trade number of Super-P), and 2.9 parts by weight polyvinylidene fluoride (PVDF) binder (with a trade number of PVDF-5130, commercially available from Solvay) were uniformly dispersed in 1-methyl-2-pyrrolidinone (NMP), obtaining a lithium iron manganese phosphate slurry. Next, the lithium iron manganese phosphate slurry was coated on the positive electrode active layer. After drying, a first layer was obtained (disposed on the positive electrode active layer) (with a thickness about 18µm and an area weight of about 4mg/cm²), wherein the lamination of the positive electrode current-collecting layer, the positive electrode active layer, and the first layer served as the positive electrode. The resistance of the obtained first layer was measured using a four-point probe resistance meter, and the resistance of the first layer was about 9052. After measuring, the electric resistance ratio of the first layer to the positive electrode active layer was of about 1×10⁴.

Next, a copper foil (with a trade number of BFR-F, commercially available from Chang Chun Group) (serving as negative electrode) and a separator with an aluminum oxide layer (commercially available from BenQ, with a thickness about 18µm, wherein the thickness of aluminum oxide layer was 2µm) was provided.

Next, the negative electrode, separator with aluminum oxide layer, and positive electrode were placed in sequence (the first layer of the positive electrode was oriented toward the aluminum oxide layer), and sealed within an aluminum foil cell (with a size of 5mm (thickness) × 60mm (width) × 80mm (length), and then a liquid electrolyte (commercially available from Hopax Chemicals Manufacturing Co Ltd. with a trade number of NDFX2) was injected into the aluminum foil cell to obtain a battery.

Next, the battery was charged at 1C charging rate to result in overcharging, and the phenomena were recorded when the battery reached a charge of 6V. The results are shown in Table 3.

### Comparative Example 3

The lamination of the positive electrode current-collecting layer and the positive electrode active layer of Example 3 was provided. A copper foil (with a trade number of BFR-F, commercially available from Chang Chun Group) (serving as negative electrode) and the separator having aluminum oxide layer of Example 3 were provided.

Next, the negative electrode, separator with aluminum oxide layer, and positive electrode were placed in sequence (the first layer of the positive electrode was oriented toward the aluminum oxide layer), and sealed within an aluminum foil cell (with a size of 5mm (thickness) × 60mm (width) × 80mm (length), and then a liquid electrolyte (commercially available from Hopax Chemicals Manufacturing Co Ltd. with a trade number of NDFX2) was injected into the aluminum foil cell to obtain a battery.

Next, the battery was charged at 1C charging rate to result in overcharging, and the phenomena were recorded when the battery reached a charge of 6V. The results are shown in Table 3.

### Example 4

96 parts by weight of lithium nickel manganese cobalt oxide (with a chemical structure of LiNi_{0.83∼0.85}Mn_{0.4∼0.5}Co_{0.11∼0.12}O₂ (commercially available from Ningbo Ronbay New Energy Technology Co., Ltd. with a trade number of NMC811), 2 parts by weight conductive carbon black (commercially available from Timcal with a trade number of Super-P), and 2 parts by weight polyvinylidene fluoride (PVDF) binder (with a trade number of PVDF-5130, commercially available from Solvay) were uniformly dispersed in 1-methyl-2-pyrrolidinone (NMP), obtaining a positive electrode active layer slurry. Next, the positive electrode active layer slurry was coated on an aluminum foil (serving as positive electrode current-collecting layer) (commercially available from An Chuan Enterprise Co., Ltd., with a thickness of 12µm). After drying, a positive electrode active layer was obtained (disposed on the positive electrode current-collecting layer) (with a thickness of about 85µm, and an area weight of about 19mg/cm²).

Next, 97 parts by weight of lithium iron manganese phosphate (LMFP) (commercially available from HCM CO., LTD. with a trade number of GE) and 3 parts by weight polyvinylidene fluoride (PVDF) binder (with a trade number of PVDF-5130, commercially available from Solvay) were uniformly dispersed in 1-methyl-2-pyrrolidinone (NMP), obtaining a lithium iron manganese phosphate slurry. Next, the lithium iron manganese phosphate slurry was coated on the positive electrode active layer. After drying, a first layer was obtained (disposed on the positive electrode active layer) (with a thickness about 18µm and an area weight of about 4mg/cm²).

10mg of stabilized lithium metal particle (commercially available from Livent with a trade number of SLMP) was uniformly disposed on the first layer. Next, a pressure of 100gf was applied to force the stabilized lithium metal particle adhering to the first layer, forming the second layer (disposed on the first layer) (with an area weight of about 0.2mg/cm²), wherein the lamination of the positive electrode current-collecting layer, the positive electrode active layer, the first layer, and the second layer serves as a positive electrode.

A copper foil (with a trade number of BFR-F, commercially available from Chang Chun Group) (serving as negative electrode) and a separator with an aluminum oxide layer (commercially available from BenQ) (with a thickness about 18µm, wherein the thickness of aluminum oxide layer was 2µm) were provided.

Next, the negative electrode, separator with aluminum oxide layer, and positive electrode were placed in sequence (the first layer of the positive electrode was oriented toward the aluminum oxide layer), and sealed within an aluminum foil cell (with a size of 5mm (thickness) × 60mm (width) × 80mm (length), and then a liquid electrolyte (commercially available from Hopax Chemicals Manufacturing Co Ltd. with a trade number of NDFX2) was injected into the aluminum foil cell to obtain a battery.

Next, the battery was charged at 1C charging rate to result in overcharging, and the phenomena were recorded when the battery reached a charge of 6V. The results are shown in Table 3.

**Table 3**

| | time for charging to 6V (sec) | phenomenon |
|---|---|---|
| Example 3 | ∼5300 | The battery did not explode (the charging time was prolonged by 800 seconds in comparison with Comparative Example 3) |
| Example 4 | ∼9000 | The battery did not explode (the charging time was prolonged by 4500 seconds in comparison with Comparative Example 3) |
| Comparative Example 3 | ∼4500 | The battery did not explode |

As shown in Table 3, in comparison with the battery of Comparative Example 3, when the battery (i.e. the battery of Example 3) employed the positive electrode of the disclosure (having a lithium iron manganese phosphate layer disposed on the positive electrode active layer), the period for charging the battery to 6V was prolonged, and the battery can still maintain at 6V during continuously charging after charging the battery to 6V, thereby preventing the battery from exploding. Furthermore, when the battery (i.e. the battery of Example 4) employed the positive electrode of the disclosure (having a lithium iron manganese phosphate layer and a stabilized lithium metal particle layer disposed on the positive electrode active layer), the period for charging the battery to 6V was prolonged, and the battery can still maintain at 6V during continuously charging after charging the battery to 6V, thereby preventing the battery from exploding.

### Comparative Example 4

The lamination of the positive electrode current-collecting layer and the positive electrode active layer of Example 3 was provided.

10mg of stabilized lithium metal particle (commercially available from Livent with a trade number of SLMP) was uniformly disposed on the positive electrode active layer. Next, a pressure of 100gf was applied to force the stabilized lithium metal particle adhering to the positive electrode active layer, forming the stabilized lithium metal particle layer (disposed on the positive electrode active layer) (with an area weight of about 0.2mg/cm²), wherein the lamination of the positive electrode current-collecting layer, the positive electrode active layer and the stabilized lithium metal particle layer serves as a positive electrode.

A copper foil (with a trade number of BFR-F, commercially available from Chang Chun Group) (serving as negative electrode) and the separator having aluminum oxide layer of Example 3 were provided.

Next, the negative electrode, separator with aluminum oxide layer, and positive electrode were placed in sequence (the stabilized lithium metal particle layer of the positive electrode was oriented toward the aluminum oxide layer), and sealed within an aluminum foil cell (with a size of 5mm (thickness) × 60mm (width) × 80mm (length), and then a liquid electrolyte (commercially available from Hopax Chemicals Manufacturing Co Ltd. with a trade number of NDFX2) was injected into the aluminum foil cell to obtain a battery.

The discharge specific capacity of batteries of Examples 3 and 4 and Comparative Examples 3 and 4 at the first charge/discharge cycle was measured at charge rate and discharge rate of 0.1C/0. 1C (from 4.5V to 3V), and the results are shown in Table 4.

**Table 4**

| | Structure of positive electrode | discharging specific capacity (mAh/g) |
|---|---|---|
| Example 3 | positive electrode current-collecting layer /positive electrode active layer /first layer | 212.42 |
| Example 4 | positive electrode current-collecting layer /positive electrode active layer /first layer /second layer (stabilized lithium metal particle layer) | 224.81 |
| Comparative Example 3 | positive electrode current-collecting layer /positive electrode active layer | 217.08 |
| Comparative Example 4 | positive electrode current-collecting layer /positive electrode active layer /stabilized lithium metal particle layer | 197.11 |

As shown in Table 4, the battery employing the positive electrode of the disclosure (having a lithium iron manganese phosphate layer disposed on the positive electrode active layer) (i.e. the battery of Example 3) exhibits sufficient discharging specific capacity. In addition, in comparison with the battery of Comparative Example 3, the battery of Comparative Example 4 exhibits lower discharging specific capacity when the stabilized lithium metal particle layer directly contacts the positive electrode active layer. In comparison with the battery of Comparative Example 4, the battery of Example 4 exhibits increased discharging specific capacity, since the battery of Example 4 employs the positive electrode of the disclosure (having a lithium iron manganese phosphate layer and a stabilized lithium metal particle layer disposed on the positive electrode active layer).

### Example 5

96 parts by weight of lithium nickel manganese cobalt oxide (with a chemical structure of LiNi_{0.6}Mn_{0.2}Co_{0.2}O₂) (commercially available from Ningbo Ronbay New Energy Technology Co., Ltd. with a trade number of NMC622), 2 parts by weight conductive carbon black (commercially available from Timcal with a trade number of Super-P), and 2 parts by weight polyvinylidene fluoride (PVDF) binder (with a trade number of PVDF-5130, commercially available from Solvay) were uniformly dispersed in 1-methyl-2-pyrrolidinone (NMP), obtaining a positive electrode active layer slurry. Next, the positive electrode active layer slurry was coated on an aluminum foil (serving as positive electrode current-collecting layer) (commercially available from An Chuan Enterprise Co., Ltd., with a thickness of 12µm). After drying, a positive electrode active layer was obtained (disposed on the positive electrode current-collecting layer) (with a thickness of about 65µm and an area weight of about 19mg/cm²). The resistance of the obtained positive electrode active layer was measured using a four-point probe resistance meter, and the resistance of the positive electrode active layer was about 0.00852.

Next, 97 parts by weight of lithium iron manganese phosphate (LMFP) (commercially available from HCM CO., LTD. with a trade number of GE), and 3 parts by weight polyvinylidene fluoride (PVDF) binder (with a trade number of PVDF-5130, commercially available from Solvay) were uniformly dispersed in 1-methyl-2-pyrrolidinone (NMP), obtaining a lithium iron manganese phosphate slurry. Next, the lithium iron manganese phosphate slurry was coated on the positive electrode active layer. After drying, a first layer was obtained (disposed on the positive electrode active layer) (with a thickness about 18µm and an area weight of about 2mg/cm²), wherein the lamination of the positive electrode current-collecting layer, the positive electrode active layer, and the first layer served as the positive electrode. The resistance of the obtained first layer was measured using a four-point probe resistance meter, and the resistance of the first layer was about 313Ω. After measuring, the electric resistance ratio of the first layer to the positive electrode active layer was of about 3.9×10⁴.

Next, a copper foil (commercially available from Chang Chun Group with a trade number of BFR-F) (serving negative electrode) and a polyethylene (PE) separator (commercially available from Asahi Kasei with a trade number of N9620) (with a thickness of about 16µm) were provided. Next, the negative electrode, separator with aluminum oxide layer, and positive electrode were placed in sequence (the first layer of the positive electrode was oriented toward the separator), and sealed within an aluminum foil cell (with a size of 5mm (thickness) × 60mm (width) × 80mm (length), and then a liquid electrolyte was injected into the aluminum foil cell to obtain a battery. The liquid ielectrolyte ncluded LiPF₆ and solvent, wherein the solvent was ethylene carbonate (EC) and diethyl carbonate (DEC), the volume ratio of EC to DEC was 1:1, and the concentration of LiPF₆ was 1. 1M.

Next, the battery was charged at 1C charging rate to result in overcharging, and the phenomena were recorded when the battery reached a charge of 19V. The results are shown in Table 5.

### Example 6

96 parts by weight of lithium nickel manganese cobalt oxide (with a chemical structure of LiNi_{0.6}Mn_{0.2}Co_{0.2}O₂) (commercially available from Ningbo Ronbay New Energy Technology Co., Ltd. with a trade number of NMC622), 2 parts by weight conductive carbon black (commercially available from Timcal with a trade number of Super-P), and 2 parts by weight polyvinylidene fluoride (PVDF) binder (with a trade number of PVDF-5130, commercially available from Solvay) were uniformly dispersed in 1-methyl-2-pyrrolidinone (NMP), obtaining a positive electrode active layer slurry. Next, the positive electrode active layer slurry was coated on an aluminum foil (serving as positive electrode current-collecting layer) (commercially available from An Chuan Enterprise Co., Ltd., with a thickness of 12µm). After drying, a positive electrode active layer was obtained (disposed on the positive electrode current-collecting layer) (with a thickness of about 65µm and an area weight of about 19mg/cm²). The resistance of the obtained positive electrode active layer was measured using a four-point probe resistance meter, and the resistance of the positive electrode active layer was about 0.00852.

Next, 96.5 parts by weight of lithium iron manganese phosphate (LMFP) (commercially available from HCM CO., LTD. with a trade number of GE), 0.5 parts by weight of VGCF and 3 parts by weight polyvinylidene fluoride (PVDF) binder (with a trade number of PVDF-5130, commercially available from Solvay) were uniformly dispersed in 1-methyl-2-pyrrolidinone (NMP), obtaining a lithium iron manganese phosphate slurry. Next, the lithium iron manganese phosphate slurry was coated on the positive electrode active layer. After drying, a first layer was obtained (disposed on the positive electrode active layer) (with a thickness about 18µm and an area weight of about 2mg/cm²), wherein the lamination of the positive electrode current-collecting layer, the positive electrode active layer, and the first layer served as the positive electrode. The resistance of the obtained first layer was measured using a four-point probe resistance meter, and the resistance of the first layer was about 9252. After measuring, the electric resistance ratio of the first layer to the positive electrode active layer was of about 1.1×10⁴.

Next, a copper foil (commercially available from Chang Chun Group with a trade number of BFR-F) (serving negative electrode) and a polyethylene (PE) separator (commercially available from Asahi Kasei with a trade number of N9620) (with a thickness of about 16µm) were provided. Next, the negative electrode, separator with aluminum oxide layer, and positive electrode were placed in sequence (the first layer of the positive electrode was oriented toward the separator), and sealed within an aluminum foil cell (with a size of 5mm (thickness) × 60mm (width) × 80mm (length), and then a liquid electrolyte was injected into the aluminum foil cell to obtain a battery. The liquid electrolyte included LiPF₆ and solvent, wherein the solvent was ethylene carbonate (EC) and diethyl carbonate (DEC), the volume ratio of EC to DEC was 1:1, and the concentration of LiPF₆ was 1. 1M.

Next, the battery was charged at 1C charging rate to result in overcharging, and the phenomena were recorded when the battery reached a charge of 19V. The results are shown in Table 5.

### Comparative Example 5

96 parts by weight of lithium nickel manganese cobalt oxide (with a chemical structure of LiNi_{0.6}Mn_{0.2}Co_{0.2}O₂) (commercially available from Ningbo Ronbay New Energy Technology Co., Ltd. with a trade number of NMC622), 2 parts by weight conductive carbon black (commercially available from Timcal with a trade number of Super-P), and 2 parts by weight polyvinylidene fluoride (PVDF) binder (with a trade number of PVDF-5130, commercially available from Solvay) were uniformly dispersed in 1-methyl-2-pyrrolidinone (NMP), obtaining a positive electrode active layer slurry. Next, the positive electrode active layer slurry was coated on an aluminum foil (serving as positive electrode current-collecting layer) (commercially available from An Chuan Enterprise Co., Ltd., with a thickness of 12µm). After drying, a positive electrode active layer was obtained (disposed on the positive electrode current-collecting layer) (with a thickness of about 65µm and an area weight of about 19mg/cm²). The resistance of the obtained positive electrode active layer was measured using a four-point probe resistance meter, and the resistance of the positive electrode active layer was about 0.00852.

Next, 96.5 parts by weight of lithium iron manganese phosphate (LMFP) (commercially available from HCM CO., LTD. with a trade number of GE), 0.5 parts by weight of VGCF, 0.1 parts by weight carbon nanotube (commercially available from Beijing Cnano Technology with a trade number of CNT) and 2.9 parts by weight polyvinylidene fluoride (PVDF) binder (with a trade number of PVDF-5130, commercially available from Solvay) were uniformly dispersed in 1-methyl-2-pyrrolidinone (NMP), obtaining a lithium iron manganese phosphate slurry. Next, the lithium iron manganese phosphate slurry was coated on the positive electrode active layer. After drying, a first layer was obtained (disposed on the positive electrode active layer) (with a thickness about 10µm and an area weight of about 2mg/cm²), wherein the lamination of the positive electrode current-collecting layer, the positive electrode active layer, and the first layer served as the positive electrode. The resistance of the obtained first layer was measured using a four-point probe resistance meter, and the resistance of the first layer was about 0.019652. After measuring, the electric resistance ratio of the first layer to the positive electrode active layer was of about 2.5.

Next, a copper foil (commercially available from Chang Chun Group with a trade number of BFR-F) (serving negative electrode) and a polyethylene (PE) separator (commercially available from Asahi Kasei with a trade number of N9620) (with a thickness of about 16µm) were provided. Next, the negative electrode, separator with aluminum oxide layer, and positive electrode were placed in sequence (the first layer of the positive electrode was oriented toward the separator), and sealed within an aluminum foil cell (with a size of 5mm (thickness) × 60mm (width) × 80mm (length), and then a liquid electrolyte was injected into the aluminum foil cell to obtain a battery. The liquid electrolyte included LiPF₆ and solvent, wherein the solvent was ethylene carbonate (EC) and diethyl carbonate (DEC), the volume ratio of EC to DEC was 1:1, and the concentration of LiPF₆ was 1. 1M.

Next, the battery was charged at 1C charging rate to result in overcharging, and the phenomena were recorded when the battery reached a charge of 19V. The results are shown in Table 5.

**Table 5**

| | time for charging to 19V (sec) | phenomenon | resistance ratio |
|---|---|---|---|
| Example 5 | ∼9600 | The battery did not explode | 3.9x10⁴ |
| Example 6 | ∼11000 | The battery did not explode | 1.1x10⁴ |
| Comparative Example 1 | ∼9600 | The battery short-circuited, exploded and burned | - |
| Comparative Example 5 | ∼9000 | The battery short-circuited, exploded and burned | 2.5 |

As shown in Table 5, in comparison with the battery of Comparative Example 5, when the battery (i.e. the batteries of Examples 5-6) employed the positive electrode of the disclosure (having a lithium iron manganese phosphate layer disposed on the positive electrode active layer), the period for charging the battery to 19V was prolonged, and the battery can still maintain at 19V during continuously charging after charging the battery to 19V, thereby preventing the battery from exploding.

### Example 7

96.3 parts by weight of SiO/C (silicon oxide and carbon mixture) (commercially available from Kaijin New Energy Technology Co., Ltd. with a trade designation of KYX-2), 0.3 parts by weight conductive carbon black (commercially available from Timcal with a trade number of Super-P), 1.5 parts by weight styrene butadiene rubber (SBR) (commercially available from JSR), 1.3 parts by weight of carboxymethyl cellulose (CMC) (with a trade number of CMC-2200, commercially available from Daicel Chemical industries), and 0.6 parts by weight carbon nanotube (with a trade number of TUBALL^{™}, commercially available from OCSiAl) were mixed and then uniformly dispersed in deionized water, obtaining a negative electrode active layer slurry. Next, the negative electrode active layer slurry was coated on a copper foil (commercially available from Chang Chun Group with a trade number of BFR-F) (with a thickness of about 12µm). After drying, obtaining a negative electrode.

The positive electrode and the separator having aluminum oxide layer of Example 3 were provided.

Next, the negative electrode, separator with aluminum oxide layer, and positive electrode were placed in sequence (the first layer of the positive electrode was oriented toward the aluminum oxide layer), and sealed within an aluminum foil cell (with a size of 5mm (thickness) × 60mm (width) × 80mm (length), and then a liquid electrolyte (commercially available from Formosa Plastics Corporation with a trade number of LD88) was injected into the aluminum foil cell to obtain a battery.

### Example 8

The negative electrode of Example 7, the positive electrode of Example 4 and the separator having aluminum oxide layer of Example 3 were provided.

Next, the negative electrode, separator with aluminum oxide layer, and positive electrode were placed in sequence (the second layer of the positive electrode was oriented toward the aluminum oxide layer), and sealed within an aluminum foil cell (with a size of 5mm (thickness) × 60mm (width) × 80mm (length), and then a liquid electrolyte (commercially available from Formosa Plastics Corporation with a trade number of LD88) was injected into the aluminum foil cell to obtain a battery.

The discharge specific capacity of batteries of Examples 7 and 8 at the first charge/discharge cycle was measured at charge rate and discharge rate of 0.1C/0.1C (from 4.2V to 2.8V), and the results are shown in Table 6.

**Table 6**

| | structure of positive electrode | discharging specific capacity (mAh/g) |
|---|---|---|
| Example 7 | positive electrode current-collecting layer /positive electrode active layer /first layer | 163.86 |
| Example 8 | positive electrode current-collecting layer /positive electrode active layer /first layer | 188.33 |
| | /second layer (stabilized lithium metal particle layer) | |

As shown in Table 6, the battery (i.e. the battery of Example 8) exhibits increased discharging specific capacity, since the battery employs the positive electrode of the disclosure (having a lithium iron manganese phosphate layer and a stabilized lithium metal particle layer disposed on the positive electrode active layer).

Next, the capacity retention of the batteries of Examples 7 and 8 was measured, and the results are shown in Table 7. The capacity retention was measured by determining the discharge specific capacity at the first charge/discharge cycle and the discharge specific capacity at the 50th charge/discharge cycle at charge rate and discharge rate of 0.1C/0.1C at 25°C.

**Table 7**

| | structure of positive electrode | capacity retention (%) (50^{th} charge/discharge cycle) | |
|---|---|---|---|
| Example 7 | positive electrode current-collecting layer /positive electrode active layer /first layer | | ∼77 |
| Example 8 | positive electrode current-collecting layer /positive electrode active layer /first layer /second layer (stabilized lithium metal particle layer) | | ∼76 |

As shown in Tables 6 and 7, the battery employing the positive electrode of the disclosure exhibits increased discharge specific capacity on the premise that the capacity retention is not reduced.

### Example 9

96 parts by weight of lithium nickel manganese cobalt oxide (with a chemical structure of LiNi_{0.6}Mn_{0.2}Co_{0.2}O₂) (commercially available from Ningbo Ronbay New Energy Technology Co., Ltd. with a trade number of NMC622), 2 parts by weight conductive carbon black (commercially available from Timcal with a trade number of Super-P), and 2 parts by weight polyvinylidene fluoride (PVDF) binder (with a trade number of PVDF-5130, commercially available from Solvay) were uniformly dispersed in 1-methyl-2-pyrrolidinone (NMP), obtaining a positive electrode active layer slurry. Next, the positive electrode active layer slurry was coated on an aluminum foil (serving as positive electrode current-collecting layer) (commercially available from An Chuan Enterprise Co., Ltd., with a thickness of 12µm). After drying, a positive electrode active layer was obtained (disposed on the positive electrode current-collecting layer) (with a thickness of about 65µm and an area weight of about 19mg/cm²). The resistance of the obtained positive electrode active layer was measured using a four-point probe resistance meter, and the resistance of the positive electrode active layer was about 0.00852.

Next, 96.5 parts by weight of lithium iron manganese phosphate (LMFP) (commercially available from HCM CO., LTD. with a trade number of GE), 0.5 parts by weight of VGCF, 0.07 parts by weight of carbon nanotube (commercially available from Beijing Cnano Technology with a trade number of CNT) and 2.93 parts by weight polyvinylidene fluoride (PVDF) binder (with a trade number of PVDF-5130, commercially available from Solvay) were uniformly dispersed in 1-methyl-2-pyrrolidinone (NMP), obtaining a lithium iron manganese phosphate slurry. Next, the lithium iron manganese phosphate slurry was coated on the positive electrode active layer. After drying, a first layer was obtained (disposed on the positive electrode active layer) (with a thickness about 18µm and an area weight of about 2mg/cm²), wherein the lamination of the positive electrode current-collecting layer, the positive electrode active layer, and the first layer served as the positive electrode. The resistance of the obtained first layer was measured using a four-point probe resistance meter, and the resistance of the first layer was about 2.418Ω. After measuring, the electric resistance ratio of the first layer to the positive electrode active layer was of about 302.

Next, a copper foil (commercially available from Chang Chun Group with a trade number of BFR-F) (serving negative electrode) and a polyethylene (PE) separator (commercially available from Asahi Kasei with a trade number of N9620) (with a thickness of about 16µm) were provided. Next, the negative electrode, separator with aluminum oxide layer, and positive electrode were placed in sequence (the first layer of the positive electrode was oriented toward the separator), and sealed within an aluminum foil cell (with a size of 5mm (thickness) × 60mm (width) × 80mm (length), and then a liquid electrolyte was injected into the aluminum foil cell to obtain a battery. The liquid electrolyte included LiPF₆ and solvent, wherein the solvent was ethylene carbonate (EC) and diethyl carbonate (DEC), the volume ratio of EC to DEC was 1:1, and the concentration of LiPF₆ was 1. 1M.

Next, the battery was charged at 1C charging rate to result in overcharging, and the phenomena were recorded when the battery reached a charge of 19V. The results are shown in Table 8.

### Example 10

96 parts by weight of lithium nickel manganese cobalt oxide (with a chemical structure of LiNi_{0.6}Mn_{0.2}Co_{0.2}O₂) (commercially available from Ningbo Ronbay New Energy Technology Co., Ltd. with a trade number of NMC622), 2 parts by weight conductive carbon black (commercially available from Timcal with a trade number of Super-P), and 2 parts by weight polyvinylidene fluoride (PVDF) binder (with a trade number of PVDF-5130, commercially available from Solvay) were uniformly dispersed in 1-methyl-2-pyrrolidinone (NMP), obtaining a positive electrode active layer slurry. Next, the positive electrode active layer slurry was coated on an aluminum foil (serving as positive electrode current-collecting layer) (commercially available from An Chuan Enterprise Co., Ltd., with a thickness of 12µm). After drying, a positive electrode active layer was obtained (disposed on the positive electrode current-collecting layer) (with a thickness of about 65µm and an area weight of about 19mg/cm²). The resistance of the obtained positive electrode active layer was measured using a four-point probe resistance meter, and the resistance of the positive electrode active layer was about 0.00852.

Next, 96 parts by weight of lithium iron manganese phosphate (LMFP) (commercially available from HCM CO., LTD. with a trade number of GE) and 4 parts by weight polyvinylidene fluoride (PVDF) binder (with a trade number of PVDF-5130, commercially available from Solvay) were uniformly dispersed in 1-methyl-2-pyrrolidinone (NMP), obtaining a lithium iron manganese phosphate slurry. Next, the lithium iron manganese phosphate slurry was coated on the positive electrode active layer. After drying, a first layer was obtained (disposed on the positive electrode active layer) (with a thickness about 18µm and an area weight of about 2mg/cm²), wherein the lamination of the positive electrode current-collecting layer, the positive electrode active layer, and the first layer served as the positive electrode. The resistance of the obtained first layer was measured using a four-point probe resistance meter, and the resistance of the first layer was about 5750Ω. After measuring, the electric resistance ratio of the first layer to the positive electrode active layer was of about 7.2×10⁵.

Next, a copper foil (commercially available from Chang Chun Group with a trade number of BFR-F) (serving negative electrode) and a polyethylene (PE) separator (commercially available from Asahi Kasei with a trade number of N9620) (with a thickness of about 16µm) were provided. Next, the negative electrode, separator with aluminum oxide layer, and positive electrode were placed in sequence (the first layer of the positive electrode was oriented toward the separator), and sealed within an aluminum foil cell (with a size of 5mm (thickness) × 60mm (width) × 80mm (length), and then a liquid electrolyte was injected into the aluminum foil cell to obtain a battery. The liquid electrolyte included LiPF₆ and solvent, wherein the solvent was ethylene carbonate (EC) and diethyl carbonate (DEC), the volume ratio of EC to DEC was 1:1, and the concentration of LiPF₆ was 1. 1M.

Next, the battery was charged at 1C charging rate to result in overcharging, and the phenomena were recorded when the battery reached a charge of 19V. The results are shown in Table 8.

**Table 8**

| | time for charging to 19V (sec) | phenomenon | resistance ratio |
|---|---|---|---|
| Example 9 | ∼9800 | The battery did not explode | 3x10² |
| Example 10 | ∼10000 | The battery did not explode | 7.2x10⁵ |

Accordingly, due to the specific composition and structure of the positive electrode of the disclosure, the occurrence period of internal short circuit in the lithium battery including the positive electrode can be prolonged. In addition, when the lithium battery including the positive electrode experiences an internal short circuit, the release of battery energy can be slowed down (i.e. reducing the energy release rate), thereby increasing the safety of the lithium battery during use. Moreover, the lithium battery employing the positive electrode (having specific composition and structure) of the disclosure exhibits increased discharge specific capacity on the premise that the capacity retention is not reduced.

While the invention has been described by way of example and in terms of the preferred embodiments, it should be understood that the invention is not limited to the disclosed embodiments. On the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A positive electrode, comprising:
a positive electrode active layer; and
a first layer disposed on the positive electrode active layer, wherein the first layer comprises a lithium-iron-phosphorus-containing oxide and a first binder, and the electric resistance ratio of the first layer to the positive electrode active layer is greater than or equal to 100.

2. The positive electrode as claimed in Claim 1, wherein the lithium-iron-phosphorus-containing oxide is lithium iron manganese phosphate, lithium iron phosphate or a combination thereof

3. The positive electrode as claimed in Claim 1, wherein the weight ratio of the first binder to the lithium-iron-phosphorus-containing oxide is 1:99 to 5:95.

4. The positive electrode as claimed in Claim 1, wherein the first layer further comprises a first inorganic powder, wherein the weight ratio of the first inorganic powder to the lithium-iron-phosphorus-containing oxide is 0.1:99.9 to 1:99.

5. The positive electrode as claimed in Claim 4, wherein the first inorganic powder is a conductive powder, first metal oxide, or a combination thereof.

6. The positive electrode as claimed in Claim 5, wherein the conductive powder is a metal, an alloy of the metal, conductive carbon black, conductive graphite, fluorocarbon, reduced graphene, nitrogen-doped graphite, nitrogen-doped graphene, carbon fiber, carbon nanotube or a combination thereof, wherein the metal is zirconium, chromium, molybdenum, tungsten, manganese, iron, osmium, cobalt, nickel, palladium, platinum, copper, silver, gold, zinc, indium, tin, lead, or aluminum.

7. The positive electrode as claimed in Claim 5, wherein the first metal oxide is aluminum oxide, zirconium oxide, zinc oxide, silicon oxide, tin oxide, or a combination thereof.

8. The positive electrode as claimed in Claim 1, further comprising:
a second layer disposed on the first layer, wherein the second layer comprises a second inorganic powder, wherein the second inorganic powder is a second metal oxide, stabilized lithium metal particle, or a combination thereof.

9. The positive electrode as claimed in Claim 8, wherein the second metal oxide is aluminum oxide, zirconium oxide, zinc oxide, silicon oxide, tin oxide, or a combination thereof.

10. The positive electrode as claimed in Claim 8, wherein the second layer further comprises a second binder, wherein the weight ratio of the second binder to the second inorganic powder is 0.1:99.9 to 10:90.

11. A battery, comprising:
a positive electrode, wherein the positive electrode is the positive electrode as claimed in Claim 1;
a separator; and
a negative electrode, wherein the negative electrode is separated from the positive electrode via the separator.

12. The battery as claimed in Claim 11, further comprising:
a liquid electrolyte, disposed between the positive electrode and the negative electrode.

13. The battery as claimed in Claim 11, wherein the negative electrode comprises a negative electrode current-collecting layer.

14. The battery as claimed in Claim 13, wherein the negative electrode further comprises a negative electrode active layer disposed on the negative electrode current-collecting layer, wherein the negative electrode active layer comprises a negative electrode active material.

15. The battery as claimed in Claim 11, further comprising:
a metal oxide layer, wherein the metal oxide is disposed on the separator, and the metal oxide layer is disposed between the separator and the positive electrode.
